# EUROPEAN PATENT APPLICATION

(11) **EP 1 646 029 A2**
(43) Date of publication of application: **12.04.2006**
(21) Application number: 05109119.7
(22) Date of filing: 30.09.2005
(51) Int. Cl.: G09G 3/20

(54) **Image display apparatus with different synchronisation signals**

(30) Priority: 11.10.2004 KR 2004081066
(71) Applicant: Samsung Electronics Co, Ltd, Suwon-si, Gyeonggi-do 442-742 (KR)
(72) Inventor: Jeong, Won-sik, Gyeonggi-Do (KR); Park, Tae-je, Suwon-si Gyeonggi-do (KR)
(74) Representative: Read, Matthew Charles

(57) **Abstract**

An image display apparatus includes a sync signal outputting unit (10) that generates a first sync signal based on an input signal from an input source (2), an internal sync signal generating unit (20) that generates a second sync signal based on stored frequency information relating to the input source (2) and a switching unit (30) that selectively provides one of the first and second sync signals to an image output unit (50). When the apparatus is switched, to receive an input signal from a new input source (1), an updated second sync signal, based on stored information relating to the new input source (1), is used to adapt the driving speed of a colour wheel (56) while an updated first sync signal, based on the frequency of the new input signal, is generated. This allows the updated first sync signal to be generated during stabilisation of the colour wheel (56) at its new driving speed, thereby reducing transition time.

## Description

The present invention relates to an image display apparatus and a control method therefor, and more particularly, to an image display apparatus and a control method for displaying images based on input signals a selected one of a plurality of input sources.

Image projectors are widely used for business presentations. As the demand for such equipment has increased sharply, several new types of projector have been developed. These developments have intended to provide projectors that are compact, light and slim, in order to improve their portability.

One type of display device commonly used in such projectors is the digital micromirror device (DMD). The DMD is a light switch display device that switches an angle of reflection of light into various modes by changing the angle of inclination of a micromirror. DMDs are used in digital light processing (DLP) engines.

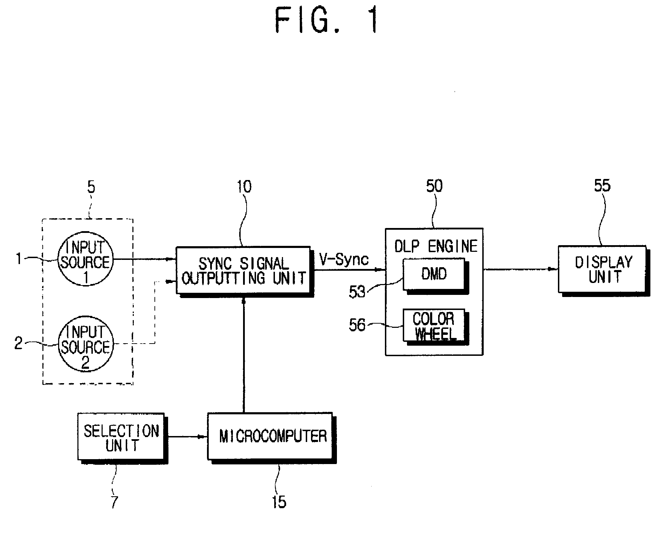

Referring to Figure 1, a known image displaying apparatus employing a DLP engine 50 comprises a light source, not shown, which generates light in accordance with an image signal. The image signal is produced by the processing of an input signal received from an input source 5. The DLP engine 50 comprises a colour wheel 56, arranged to transmit light in a plurality of wavelength bands selectively, an integrator, not shown, arranged to make the distribution of the light transmitted via the colour wheel 56 uniform, a DMD 53 to reflect or otherwise transmit the light from the integrator in predetermined directions and a display unit 55 on which an image is displayed via a transmission lens, not shown. The display of the image is thus based on the reflection of incident light by the DMD 53.

When the frequency of a vertical sync (V-Sync) signal of the input signal is changed, the driving speed of the colour wheel 56 must adapt accordingly. For example, the driving speed of the colour wheel 56 when the input signal has a frequency of 50Hz will be different from its speed when the input signal has a frequency of 60Hz. When the image display apparatus is switched to display an image based on another of said input sources 5, the frequency of the V-Sync signal is changed. As a result, transitional flickering is generated, due to instability in the driving of the colour wheel 56. The flickering continues until the colour wheel 56 has stabilised at a driving speed corresponding to the new frequency of the V-Sync signal. The transitional flickering may thus continue for approximately 2.5 seconds.

For example, in the conventional image displaying apparatus of Figure 1, a first input source 1 may be selected, using a selection unit 7, while an image signal is being received from a second input source 2. In response, a microcomputer 15 controls a signal processing unit, not shown, which includes a sync signal outputting unit 10, to process an input signal received from the first input source 1. Generally, the time required for determining the frequency of the V-Sync signal of the input signal from the first input source 1 will be between 0.8 and 3 seconds. Where the frequency of the V-Sync signal of the first input source 1 differs from the frequency of a V-Sync signal of the previously selected input source, in other words, the second input source 2, it takes a further 2.5 seconds, approximately, to stabilise the colour wheel 56. Therefore, when a new input source is selected, the transition time before a regular image from the new input signal is displayed can be up to 5.5 seconds.

An object of the present invention is the provision of an image display apparatus in which the time required to display a regular image in response to the switching of an input signal can be reduced.

According to a first aspect of the invention, an image display apparatus arranged to display images based on input signals from a selected one of a plurality of input sources, comprises an image output unit, arranged to output an image signal in accordance with a received sync signal, first sync signal generating means, arranged to process an input signal received from said selected input source to generate a first sync signal based on the processed input signal, a memory, arranged to store information relating to each one of said plurality of input sources, second sync signal generating means, arranged to generate a second sync signal based on the stored information relating to said selected input source, and switching means arranged to supply selectively to the image output unit said first and second sync signals and configured to respond to the selection of said selected input source by supplying said second sync signal to the image output unit during said processing of the input signal by the first sync signal generating means, prior to the generation of the first sync signal.

In this manner, the image output is supplied with the second sync signal, based on the stored information, while the first sync signal, based on the input signal, is being generated. Thus, when the image display apparatus is switched to display images from a different input source, the operation of the image output unit can be adapted to accommodate the new input signal using the second sync signal, while the first sync signal is being generated. Thus, the transition time, that is, the time that elapses before a regular image from the new input source can be displayed, may be reduced.

For example, the image output unit may include a colour wheel that is driven in accordance with a received sync signal. In this case, if the image display apparatus were switched from displaying images based on a first input signal to displaying images based on a second input signal having a different frequency to the first input signal, it would be necessary to adjust the driving speed of the colour wheel in accordance with the frequency of the second input signal. The provision of the second sync signal permits the driving speed of the colour wheel to be adjusted while the second input signal is being processed to generate the first sync signal, thereby reducing the transition time.

The first sync signal generating means may be arranged to generate said first sync signal based on the frequency of said input signal and the second sync signal generating means may be arranged to generate said second sync signal based on stored information relating to the frequency of input signals provided by said selected one of said input sources.

The image display apparatus may further comprise a selection unit arranged to receive a user command indicating said selection of the selected input source.

According to a second aspect of the invention, a method of displaying images comprises receiving an input signal from a selected one of a plurality of input sources, processing the input signal received from a selected one of said input sources, generating a first sync signal based on the processed input signal, supplying said first sync signal to an image output unit, generating at said image output unit an image signal based on said first sync sign and supplying said image signal to a display unit and is characterised by storing information relating to each one of said plurality of input sources, generating a second sync signal based on the stored information relating to said selected input source and supplying said second sync signal to said image output unit during the step of processing the input signal.

The method may further comprise driving a colour wheel in accordance with the first and second sync signals supplied to the image output unit and/or receiving a user command indicating said selection of the selected input source.

According to a third aspect of the invention, an image displaying apparatus includes a display unit and an image outputting unit outputting an image to the display unit, comprising a sync signal outputting unit processing an input signal and outputting a first sync signal, an internal sync signal generating unit generating a second sync signal and outputting it, a switching unit selectively outputting any one of the first sync signal and the second sync signal to the image outputting unit and a control unit including a storage unit storing therein frequency information by kinds of input signals which can externally be inputted, controlling the internal sync signal generating unit and the switching unit to thereby output the second sync signal according to a frequency of a switched input signal to the image outputting unit based on the stored frequency information, when the input signal is switched by a user.

The apparatus may be arranged so that, when the first sync signal according to the switched input signal is outputted from the sync signal outputting unit while the second sync signal according to the frequency of the input signal switched based on the frequency information is being outputted to the image outputting unit, the control unit controls the switching unit to output the first sync signal to the image outputting unit.

The control unit may be configured to determine whether frequencies of the second sync signal according to the switched input signal and the first sync signal according to the switched input signal are identical, and, in response to a determination that they are not identical, to update the frequency of the first sync signal according to the switched input signal to the frequency information of the switched input signal and store it in the storage unit.

The apparatus may be arranged so that, when the frequencies of the second sync signal according to the switched input signal and the first sync signal according to the switched input signal are not identical, the control unit controls the internal sync signal generating unit and the switching unit to output the second sync signal according to the updated frequency to the image outputting unit and, after a predetermined time has elapsed, it controls the switching unit to thereby output the first sync signal to the image outputting unit.

The control unit may comprise a program, which is included in a microcomputer controlling an image displaying function of the image displaying apparatus.

The image outputting unit may comprise a colour wheel driven at different rotation speeds depending upon the frequency of the inputted sync signal.

According to a fourth aspect of the invention, a control method of an image displaying apparatus comprising a display unit, a sync signal generating unit processing an input signal and outputting a first sync signal and an image outputting unit having a colour wheel driven at different rotation speeds depending upon a frequency of an inputted sync signal, outputting an image to the display unit, comprises: storing frequency information by kinds of input signals which can externally be inputted; sensing whether the input signal is switched; internally generating a second sync signal according to the frequency of a switched input signal based on the frequency information and outputting it, when the input signal is switched, and switching the second sync signal so as to be outputted to the image outputting unit.

The control method may further comprise: processing the switched input signal, at the sync signal outputting unit; sensing whether the sync signal outputting unit has processed the switched input signal and the first sync signal has been outputted accordingly; and switching the first sync signal to be outputted to the image outputting unit, when the first sync signal according to the switched input signal is outputted.

The step of switching may comprise determining whether frequencies of the second sync signal according to the switched input signal and the first sync signal according to the switched input signal are identical, when the first sync signal according to the switched input signal is outputted and updating the frequency of the first sync signal according to the switched input signal to the frequency information of the switched input signal and storing it, where the frequencies of the second input signal and the first input signal are not identical.

The control method may further comprise processing the switched input signal, at the sync signal outputting unit; sensing whether the sync signal outputting unit has processed the switched input signal and the first sync signal has been outputted accordingly, determining whether frequencies of the second sync signal according to the switched input signal and the first sync signal according to the switched input signal are identical, updating the frequency of the first sync signal according to the switched input signal to the frequency information of the switched input signal, where the frequencies of the second input signal and the first input signal are not identical, when the first sync signal according to the switched input signal is outputted, outputting the second sync signal according to the updated frequency and switching the first sync signal to be outputted to the image outputting unit after a predetermined time has elapsed.

Embodiments of the invention will now be described by way of example with reference to the accompanying drawings, of which:
Figure 1 is a block diagram of a conventional image displaying apparatus;
Figure 2 is a block diagram of an image displaying apparatus according to an embodiment of the present invention; and
Figure 3 is a flow chart of a procedure for controlling the image displaying apparatus according to an embodiment of the present invention.

In the following detailed description, reference will be made to the accompanying drawings, wherein like reference numerals refer to like elements throughout.

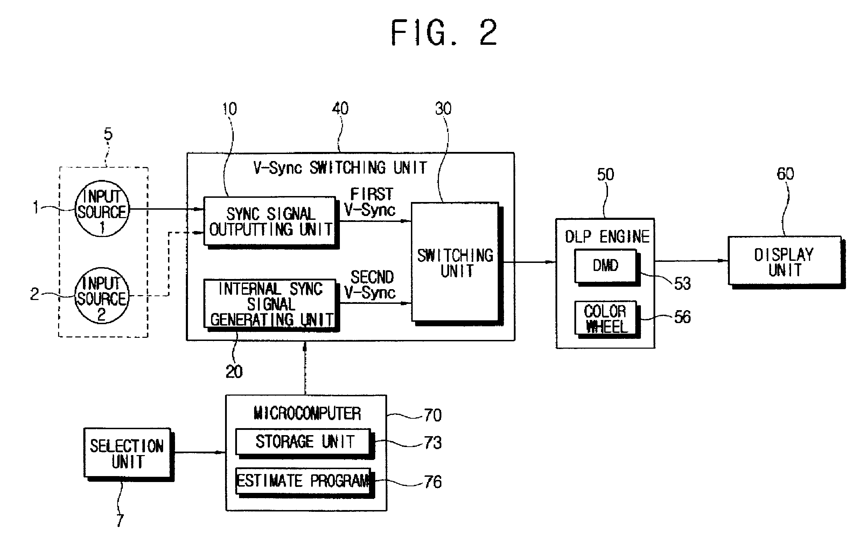

Figure 2 is a block diagram of an image display apparatus according to an embodiment of the present invention. The image display apparatus is arranged to receive and process input signals from various input sources (5). The image display apparatus comprises a display unit 60, a selection unit 7 arranged to allow a user to control an image displaying function, a V-Sync switching unit 40 arranged to selectively output a first V-sync signal generated by processing an input signal from any one of the input sources 5 and a second V-sync signal that is generated based on stored information. The image display apparatus also comprises a digital light processing (DLP) engine 50, including a colour wheel 56 to transmit light from a light source, not shown, in a selected wavelength band, and a DMD 53 to reflect or transmit light in a predetermined direction, thereby outputting an image to the display unit 60. The apparatus further comprises a microcomputer 70, which includes a storage unit 73 for storing frequency information relating to types of input signals which can be received and an estimate program 76 for controlling the V-Sync switching unit 40 in accordance with the frequency information.

Details of the DLP engine 50 are omitted as such engines have been as described above in relation to the conventional image displaying apparatus, using the same reference numerals.

The various input sources 5 provide input signals in a form that can be received by the image displaying apparatus. For example, the input sources 5 can include a base station that supplies a radio frequency (RF) broadcast signal, a video source arranged to supply an S-Video signal, a DVD player arranged to supply DVD image and sound signals, an audiovisual (AV) device that supplies audio and video (A/V) signals and so on. For the sake of convenience, the embodiment will be described by way of an example in which first and second input sources 1, 2 are provided, where the first and second input signals produce input signals having different respective frequencies.

The V-Sync switching unit 40 comprises a sync signal outputting unit 10, for processing an input signal received from either the first input source 1 or the second input source 2 and outputting the first V-Sync signal. An internal sync signal generating unit 20 is arranged to generate and output the second V-Sync signal. A switching unit 30 is provided, for selectively providing to the colour wheel 56 of the DLP engine 50 one of the first V-Sync signal and the second V-Sync signal.

The sync signal outputting unit 10 has the same configuration as the equivalent unit 10 of the conventional image displaying apparatus shown in Figure 1. In other words, the sync signal outputting unit 10 is arranged to process the input signal from either the first input source 1 or the second input source 2 and to generate and output the first V-Sync signal based on that input signal.

The internal sync signal generating unit 20 generates and outputs the second V-Sync signal, in accordance with the estimate program 76 executed by the microcomputer 70.

The microcomputer 70 comprises a storage unit 73 for storing frequency information relating to the input signals available for reception, namely the input signals provided by the first and second input sources 1, 2. The frequency information is obtained from the respective input signals when the input sources 1, 2 are initially connected to the image display apparatus. For instance, if an input source 5 comprises a base station, not shown, supplying an RF broadcast signal, the microcomputer 70 may carry out an automatic search process and store in the storage unit 73 frequency information for the various channels of the RF broadcast. Input signals of identical frequencies are generally inputted from identical input sources.

The microcomputer 70 is arranged to determine whether a command to switch from displaying an image based on the input signal from one input source to displaying an image based on the input signal from another input source has been received, for instance, from the selection unit 7, and to respond thereto. For example, if the first input source 1 is selected while an input signal from the second input source 2 is being processed, the microcomputer 70 controls the signal processing unit, not shown, to process the input signal inputted from the first input source 1. At the same time the microcomputer 70 controls the internal sync signal generating unit 20 and the switching unit 30 according to the frequency information stored in the storage unit 70, in accordance with the estimate program 76.

If the first input source 1 is selected while an input signal from the second input source 2 is being processed, the estimate program 76 controls the internal sync signal generating unit 20 to output a second V-Sync signal based on the frequency information relating to the first input source, stored in the storage unit 70. The estimate program 76 then controls the switching unit 30 so that the output from the sync signal outputting unit 10 is interrupted and the second V-Sync signal is forwarded to the DLP engine 50.

At this time, the signal processing unit, which includes the sync signal outputting unit 10, determines and processes an input signal from the first input source 1 under the control of the microcomputer 70, in a similar manner to that used in the conventional image displaying apparatus.

The estimate program 76 then determines whether the first V-Sync signal, which is based on the input signal from the first input source 1, and the second V-Sync signal, which is based on the stored frequency information relating to the first input source 1, are identical.

If it is determined that the second V-Sync signal and the first V-Sync signal are identical, the estimate program 76 controls the switching unit 30 to output the first V-Sync signal to the DLP engine 50. In this situation, the switching of the signal input to the DLP engine 50 from the second V-Sync signal to the first V-Sync signal will not cause any substantial change in the driving speed of the colour wheel 56, since the first and second V-Sync signals are identical.

In other words, the image display apparatus determines and processes a frequency of a V-Sync signal of an input signal from the first input source 1 and outputs a corresponding first V-Sync signal from the sync signal outputting unit 10. Simultaneously, the image display apparatus stabilises the driving speed of the colour wheel 56 by forwarding the second V-Sync signal to the DLP engine 50, which is based on the stored frequency information for the first input source 1. Then, if the first and V-Sync signals are identical, the image displaying apparatus switches the second V-Sync signal being outputted to the DLP engine to the first V-Sync signal.

On the other hand, if it is determined that the second V-Sync signal and the first V-Sync signal are not identical, the estimate program 76 updates the frequency information relating to the first input source 1 stored in the storage unit 73. The estimate program 76 controls the internal sync signal processing unit 20 to provide a second V-Sync signal according to the updated frequency to the DLP engine 50 and, after a predetermined time period has elapsed, controls the switching unit 30 to output the updated first V-Sync signal to the DLP engine 50. Preferably, the predetermined time period corresponds to the time required for the driving speed of the colour wheel 56 to be stabilised at a driving speed in accordance with the updated second V-Sync signal.

In the embodiment described above, the storage unit 73 and the estimate program 76 are structurally included in the microcomputer 70. However, it is not essential for these features to be included in the microcomputer 70. Instead, the storage unit 73 and estimate program 76 may be provided separately from the microcomputer 70.

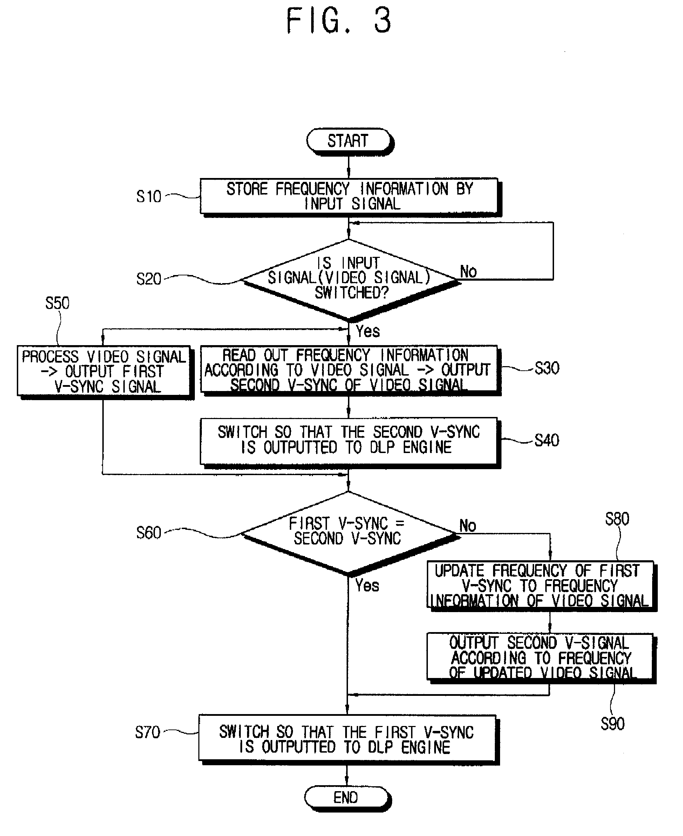

A control method for the image displaying apparatus of Figures 1 and 2 will now be described, with reference to Figure 3.

At step S10, sync signal frequency information relating to input signals from the input sources 1, 2 connected to the image displaying apparatus is stored in the storage unit 73.

At step S20, the microcomputer 70 determines whether a command to switch to a selected input source has been received from the selection unit 7. The control method will be described by way of an example, in which a command to switch from the input signal provided by the second input source 2 to an input signal from the first input source 1 is received. In this particular example, the input signal from the first input source 1 is a video signal.

If a switching command has been received, the estimate program 76 retrieves frequency information according to the video signal from the storage unit 73 and controls the internal sync signal generating unit 20 to output a second V-Sync signal based on the retrieved information (step S30). The estimate program 76 then controls the switching unit 30 to forward the second V-Sync signal to the DLP engine 50 (step S40). Thus, as a result of performing steps S30 and S40, the driving speed of the colour wheel 56 is stabilised adaptively in accordance with the frequency of the video signal.

While the estimate program 76 is performing steps S30 and S40, the microcomputer 70 processes the switched video signal and outputs an updated first V-Sync signal accordingly, as described above in relation to the conventional image display apparatus of Figure 1 (step S50). When the updated first V-Sync signal is outputted, the estimate program 76 compares it with the second V-Sync signal and determines whether they are identical (step S60). If the first and second V-Sync signals are identical, the estimate program 76 controls the switching unit 30 to forward the first V-Sync signal to the DLP engine 50 (step S70).

Since the step S50 of identifying the frequency of V-Sync signal of the video signal and outputting the updated first V-Sync signal is performed simultaneously with the process of stabilising the colour wheel 56 at its new driving speed (steps S30, S40), the time required for switching the input signal may be shorter than that of prior image display apparatuses.

If it is determined, at step S60, that the second V-Sync signal and the first V-Sync signal are not identical, the estimate program 76 updates the frequency of the first V-Sync signal in accordance with frequency information obtained from processing the video signal and stores updated frequency information in the storage unit 73 (step S80). The estimate program 76 controls the internal sync signal generating unit 20 to output a second V-Sync signal according to the updated frequency information for forwarding to the DLP engine 50 (step S90). Thereafter, the estimate program 76 controls the switching unit 30 to output the updated first V-Sync signal to the DLP engine 50, so that the driving speed of the colour wheel 56 can be driven and stabilised at the appropriate speed, according to the updated frequency information (step S70).

The input sources 5 that are available to the image displaying apparatus are generally limited. Steps S80 and S90 are identical to the process of obtaining frequency information from respective input signals when input sources 5 are first connected to the image displaying apparatus. Thus, once the frequency information of the input sources 5 is stored, it would not be necessary to perform steps S80 and S90 unless any input sources 5 were reconnected to the image displaying apparatus or any existing input sources 5 were replaced by a new input source.

As described above, when an input signal is switched, the image displaying apparatus of Figure 2 simultaneously outputs a second V-Sync signal, estimated in accordance with the stored frequency information, during the processing time required to determine a frequency of the switched input signal and output the first V-Sync signal, which is approximately 0.8 to 3 seconds, and switches the second V-Sync signal into the first V-Sync signal when the first V-Sync signal is outputted from the switched input signal processed after driving of the colour wheel 56 has been stabilised, in other words, after approximately 2.5 seconds.

Since the operations of determining the frequency of the new input signal and stabilising the colour wheel 56 at a new driving speed are performed simultaneously, the time period between the reception of the command to switch input signals and the display of a regular image is reduced.

The above described embodiments provide an image displaying apparatus capable of reducing the time required to switch an input signal by performing simultaneously an operation of processing a new input signal and an operation of stabilising a colour wheel to a new driving speed corresponding to the new input signal.

It should be understood that the present invention is not limited to the embodiments described above and those skilled in the art can make various modifications and changes without departing from the scope of the invention as defined by the appended claims.

## Claims

1. An image display apparatus arranged to display images based on input signals from a selected one (1) of a plurality of input sources (1, 2, 5), comprising:
an image output unit (50), arranged to output an image signal in accordance with a received sync signal; and
first sync signal generating means (10), arranged to process an input signal received from said selected input source (1) to generate a first sync signal based on the processed input signal;
**characterised by:**
a memory (73), arranged to store information relating to each one of said plurality of input sources (1, 2, 5);
second sync signal generating means (20), arranged to generate a second sync signal based on the stored information relating to said selected input source (1); and
switching means (30) arranged to supply selectively to the image output unit (50) said first and second sync signals and configured to respond to the selection of said selected input source (1) by supplying said second sync signal to the image output unit (50) during said processing of the input signal by the first sync signal generating means (10), prior to the generation of the first sync signal.

2. An image display apparatus according to claim 1, wherein:
said first sync signal generating means (10) is arranged to generate said first sync signal based on the frequency of said input signal; and
said second sync signal generating means (20) is arranged to generate said second sync signal based on stored information relating to the frequency of input signals provided by said selected input source (1).

3. An image display apparatus according to claim 1 or 2, wherein:
said image output unit (50) comprises a colour wheel (56) and is configured to drive said colour wheel (56) in accordance with the received sync signal.

4. An image display apparatus according to claim 1, 2 or 3, comprising a selection unit (7) arranged to receive a user command indicating said selection of the selected input source (1).

5. A method of displaying images, comprising:
receiving an input signal from a selected one (1) of a plurality of input sources (1, 2, 5);
processing the input signal received from a selected one of said input sources (1);
generating a first sync signal based on the processed input signal;
supplying said first sync signal to an image output unit (50);
generating at said image output unit (50) an image signal based on said first sync signal; and
supplying said image signal to a display unit (60);
**characterised by**:
storing information relating to each one of said plurality of input sources (1, 2, 5);
generating a second sync signal based on the stored information relating to said selected input source (1); and
in response to a selection of said selected input source (1), supplying said second sync signal to said image output unit (50) during the step of processing the input signal.

6. A method according to claim 5, comprising:
driving a colour wheel (56) in accordance with the first and second sync signals supplied to the image output unit (50).

7. A method according to claim 5 or 6, comprising:
receiving a user command indicating said selection of the selected input source (1).

8. An image displaying apparatus including a display unit and an image outputting unit outputting an image to the display unit, comprising:
a sync signal outputting unit processing an input signal and outputting a first sync signal;
an internal sync signal generating unit generating a second sync signal and outputting the second sync signal;
a switching unit selectively outputting one of the first sync signal and the second sync signal to the image outputting unit; and
a control unit including a storage unit storing therein frequency information based on kinds of input signals which can externally be inputted, controlling the internal sync signal generating unit and the switching unit to thereby output the second sync signal according to a frequency of a switched input signal to the image outputting unit based on the stored frequency information, if the input signal is switched by a user.

9. The apparatus as claimed in claim 8, wherein, if the first sync signal according to the switched input signal is outputted from the sync signal outputting unit while the second sync signal according to the frequency of the input signal switched based on the frequency information is being outputted to the image outputting unit, the control unit controls the switching unit to output the first sync signal to the image outputting unit.

10. The apparatus as claimed in claim 9, wherein the control unit determines whether frequencies of the second sync signal according to the switched input signal and the first sync signal according to the switched input signal are identical, and, if they are not identical, updates the frequency of the first sync signal according to the switched input signal to the frequency information of the switched input signal and stores it in the storage unit.

11. The apparatus as claimed in claim 10, wherein, if the frequencies of the second sync signal according to the switched input signal and the first sync signal according to the switched input signal are not identical, the control unit controls the internal sync signal generating unit and the switching unit to output the second sync signal according to the updated frequency to the image outputting unit and, after a predetermined time has elapsed, the control unit controls the switching unit to thereby output the first sync signal to the image outputting unit.

12. The apparatus as claimed in claim 11, wherein the control unit comprises a program, which is included in a microcomputer controlling an image displaying function of the image displaying apparatus.

13. The apparatus as claimed in claim 11, wherein the image outputting unit comprises a color wheel driven at different rotation speeds depending upon the frequency of an inputted sync signal.

14. A control method of an image displaying apparatus comprising a display unit, a sync signal generating unit processing an input signal and outputting a first sync signal and an image outputting unit having a color wheel driven at different rotation speeds depending upon a frequency of an inputted sync signal, and outputting an image to the display unit, said method comprising:
storing frequency information based on kinds of input signals which can externally be inputted;
sensing whether the input signal is switched;
internally generating a second sync signal according to the frequency of a switched input signal based on the frequency information and outputting the second sync signal, when the input signal is switched; and
switching the second sync signal so as to be outputted to the image outputting unit.

15. The control method as claimed in claim 14, further comprising:
processing the switched input signal, at the sync signal outputting unit;
sensing whether the sync signal outputting unit has processed the switched input signal and the first sync signal has been outputted accordingly; and
switching the first sync signal to be outputted to the image outputting unit, if the first sync signal according to the switched input signal is outputted.

16. The control method as claimed in claim 15, wherein the switching comprises:
determining whether frequencies of the second sync signal according to the switched input signal and the first sync signal according to the switched input signal are identical, if the first sync signal according to the switched input signal is outputted; and
updating the frequency of the first sync signal according to the switched input signal to the frequency information of the switched input signal and storing the updated frequency of the first sync signal, where the frequencies of the second input signal and the first input signal are not identical.

17. The control method as claimed in claim 14, further comprising:
processing the switched input signal, at the sync signal outputting unit;
sensing whether the sync signal outputting unit has processed the switched input signal and the first sync signal has been outputted accordingly;
determining whether frequencies of the second sync signal according to the switched input signal and the first sync signal according to the switched input signal are identical;
updating the frequency of the first sync signal according to the switched input signal based on the frequency information of the switched input signal, where the frequencies of the second input signal and the first input signal are not identical, if the first sync signal according to the switched input signal is outputted;
outputting the second sync signal according to the updated frequency; and switching the first sync signal to be outputted to the image outputting unit after a predetermined time has elapsed.
